# EUROPEAN PATENT APPLICATION

(11) **EP 4 625 641 A1**
(43) Date of publication of application: **01.10.2025**
(21) Application number: 24207758.4
(22) Date of filing: 21.10.2024
(51) Int. Cl.: H01M 50/202, H01M 50/233, H01M 50/147

(54) **BATTERY CELL, BATTERY MODULE COMPRISING THE BATTERY CELL, AND BATTERY PACK COMPRISING THE BATTERY MODULE**

(30) Priority: 26.03.2024 KR 20240040792
(71) Applicant: SAMSUNG SDI CO., LTD., Yongin-si, Gyeonggi-do 17084 (KR)
(72) Inventor: Cho, Man Sik, 17084 Yongin-si, Gyeonggi-do (KR)
(74) Representative: Gulde & Partner

(57) **Abstract**

A battery cell with improved safety is disclosed. The battery cell is capable of preventing high temperature heat or flames from being transferred to an adjacent battery cell when an event of the battery cell occurs A battery module including the battery cell, and a battery pack including the battery cell are also disclosed. The battery cell comprises a case; an electrode assembly accommodated inside the case; a cap assembly disposed on the case; and a protective layer disposed on the cap assembly and on the sides of the case. The electrode assembly includes a first electrode plate, a second electrode plate, and a separator between the first electrode plate and the second electrode plate. The protective layer comprises a support surface and a plurality of sides bent from the support surface, and the support surface may comprise regions of different thicknesses.

## Description

### BACKGROUND

### 1. Field

Embodiments relate to a battery cell and a battery module including the same. Embodiments further relate to a battery pack including the battery module.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

A plurality of secondary batteries, i.e. secondary battery cells, may form a battery module. The secondary batteries, i.e. secondary battery cells, of the battery module may be connected in series and/or parallel. Also, a plurality of battery modules may form a battery pack.

Heat may be generated from the secondary battery while using the battery module or battery pack. For example, an event may occur in at least one secondary battery, and high temperature gas may be generated from the secondary battery in which the event occurred. For example, a fire may occur in the secondary battery where the event occurred.

Accordingly, a chain reaction may occur as heat or flame from the secondary battery in which the event occurred moves to another secondary battery.

The information disclosed in this section is provided only for enhancement of understanding of the background of the disclosure and therefore it may contain information that does not form the prior art.

### SUMMARY

Battery cells with improved life and driving characteristics and battery modules and battery packs including the same are disclosed.

In some embodiments, the battery cell comprises a case; an electrode assembly accommodated inside the case; a cap assembly disposed on the case; and a protective layer disposed on the cap assembly and on a side of the case, the cap assembly comprises a cap plate, the electrode assembly includes a first electrode plate, a second electrode plate, and a separator between the first electrode plate and the second electrode plate, the protective layer comprises a support surface and a plurality of sides bent from the support surface, and the support surface may comprise regions of different thicknesses.

In some embodiments, the battery cell further comprises a first terminal electrically connected to the first electrode plate and a second terminal electrically connected to the second electrode plate, the cap plate comprises a safety vent, and the support surface comprises a hole overlapping the first terminal and the second terminal and a groove overlapping the safety vent.

In some embodiments, the side of the protective layer is disposed on the side of the case, and a length of the side of the protective layer is 10% to 50% of the width of the case.

In some embodiments, a thickness of the protective layer is 0.1 mm to 3 mm.

In some embodiments, the support surface comprises a first region and a second region, the first region is closer to the safety vent than the second region is to the safety vent, and a thickness of the first region is greater than a thickness of the second region.

In some embodiments, the protective layer comprises a first protective layer and a second protective layer, the first protective layer is disposed on the cap plate, and the second protective layer is disposed under the case.

In some embodiments, the battery cell further comprise a first terminal electrically connected to the first electrode plate and a second terminal electrically connected to the second electrode plate, the cap plate comprises a safety vent, the first protective layer comprises a first support surface and a plurality of first sides bent from the first support surface, the second protective layer comprises a second support surface and a plurality of second sides bent from the second support surface, the first support surface comprises a first hole overlapping the first terminal and the second terminal and a groove overlapping the safety vent, and the second support surface comprises a second hole exposing the lower portion of the case.

In some embodiments, a thickness of the first protective layer is greater than a thickness of the second protective layer.

In some embodiments, a length of the first side is longer than the length of the second side.

In some embodiments, the first protective layer and the second protective layer comprise different materials.

In some embodiments, the second hole comprises a plurality of spaced apart holes.

In some embodiments, the protective layer has a melting temperature of 500°C to 1200°C, the protective layer has a thermal conductivity of 0.5 watt per meter-Kelvin (W/m.k) to 0.8 watt per meter-Kelvin (W/m.k) and the protective layer has an elastic modulus of 1400 * 10⁻³ kilograms force per centimeter square (kgf/cm²) to 2100 * 10⁻³ kilograms force per centimeter square (kgf/cm²).

In some embodiments, the battery cell comprises a case; an electrode assembly accommodated inside the case; a cap assembly disposed on the case; and a protective layer disposed on the cap assembly and on the sides of the case, the electrode assembly comprises a first electrode plate, a second electrode plate, and a separator between the first electrode plate and the second electrode plate, the first electrode plate is electrically connected to a first terminal, the second electrode plate is electrically connected to a second terminal, the cap plate comprises a safety vent, the protective layer comprises an upper support part, a side support part, and a lower support part, the upper support part comprises a hole overlapping the first terminal and the second terminal and a groove overlapping the safety vent, the side support connects the upper support and the lower support, and the lower support part comprises a hole exposing the lower portion of the case.

In some embodiments, the case comprises a first side and a second side, the size of the first side is larger than the size of the second side, the side support comprises a first side support on the first side and a second side support on the second side, and the first side support part is disposed to cover the entire first side.

In some embodiments, the second side support part is disposed to cover the entire second side surface.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIGS. 1 and 2 are perspective views showing a battery cell according to a first embodiment.
FIG. 3 is a sectional view taken along line A-A' of FIG. 2.
FIG. 4 is another sectional view taken along line A-A' of FIG. 2.
FIGS. 5 and 6 are perspective views showing a battery cell according to a second embodiment.
FIG. 7 is a sectional view taken along line B-B' of FIG. 6.
FIG. 8 is another sectional view taken along line B-B' of FIG. 6.
FIG. 9 is another sectional view taken along line B-B' of FIG. 6.
FIG. 10 is a perspective view showing a battery cell according to a third embodiment.
FIG. 11 is a sectional view taken along line C-C' of FIG. 11.
FIG. 12 is a perspective view showing a battery cell according to a fourth embodiment.
FIG. 13 is a sectional view showing a battery cell according to a fifth embodiment.
FIG. 14 is a perspective view showing a battery module including battery cells according to some embodiments.
FIGS. 15 and 16 are perspective views showing a battery pack including battery modules according to some embodiments.
FIG. 17 is a perspective view showing a vehicle including battery packs according to some embodiments.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of " 1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Hereinafter, a battery cell, a battery module and a battery pack according to some embodiment will be described with reference to the drawings.

Hereinafter, the X-axis direction may be defined as the longitudinal direction of the case. Also, the Y-axis direction may be defined as the height direction of the case. Also, the Z-axis direction may be defined as the width direction of the case.

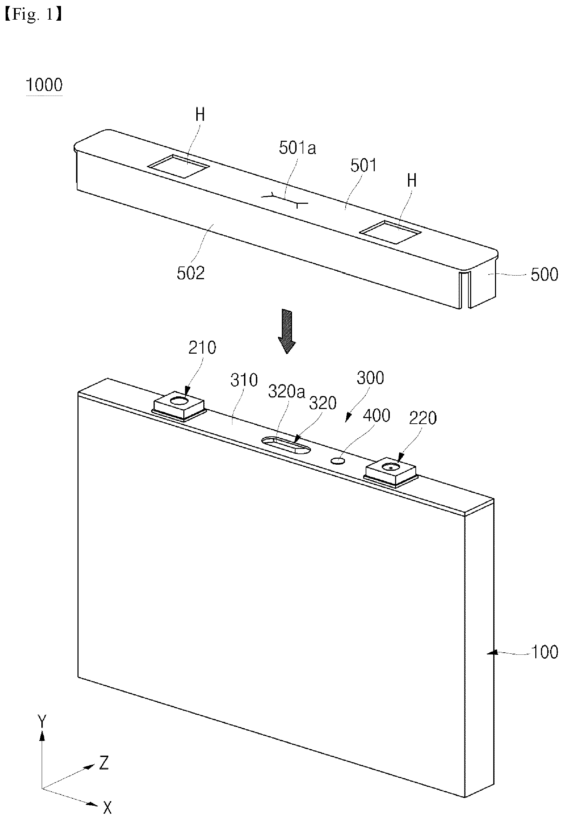

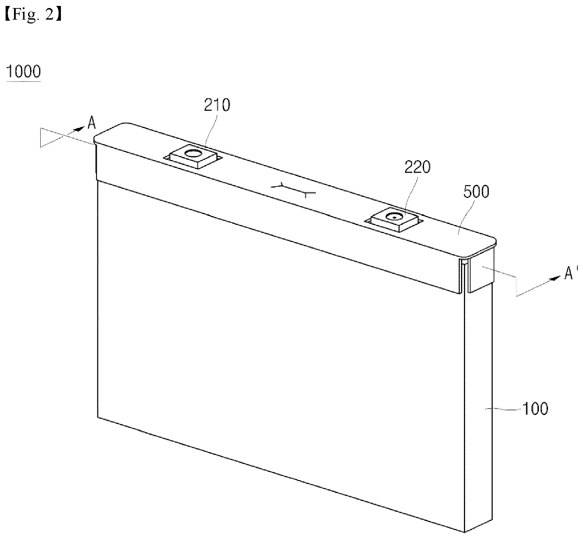

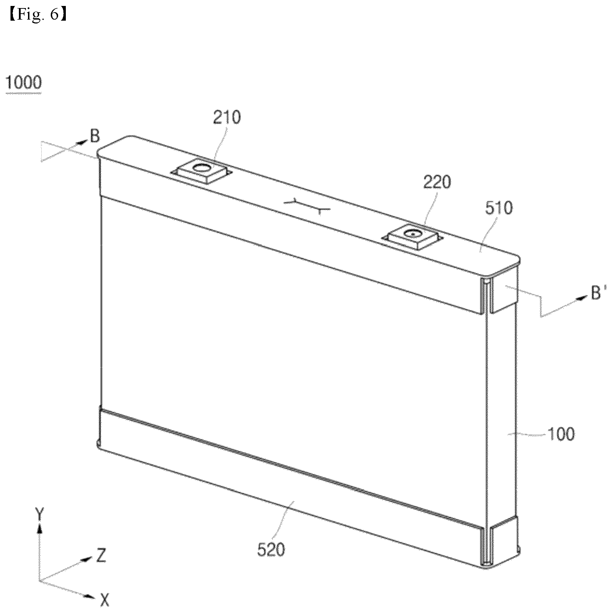

First, battery cells according to embodiments will be described with reference to FIGS. 1 to 15. The battery cells described below may be applied to battery modules and battery packs.

Referring to FIGS. 1 to 4, the battery cell according to a first embodiment includes a case 100, a cap assembly 300, a protective layer 500, and an electrode assembly 800. The electrode assembly 800 is accommodated inside the case 100. The protective layer 500 is disposed on the outside of the case 100. The case 100 may be sealed by the cap assembly 300.

The case 100 may include metal. For example, the case 100 may include aluminum, aluminum alloy, or nickel-plated steel. The case may be formed in a hexahedral shape including a receiving portion. The electrode assembly 800 may be accommodated in the receiving portion. The inner surface of the case 100 may be insulated. Accordingly, the case 100 may be insulated from the electrode assembly 800.

An electrode assembly 800 may be formed by winding or stacking a stack of a first electrode plate, a separator, and a second electrode plate, which are formed as thin plates or films. When the electrode assembly is a wound stack, a winding axis may be parallel to the X-axis or Y-axis direction. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy.

The second electrode plate may be formed by applying a second electrode active material, such as a transition metal oxide, on a second electrode current collector formed of a metal foil, such as aluminum or an aluminum alloy.

The separator is disposed between the first electrode plate and the second electrode plate. The separator reduces or prevents short circuit between the first electrode plate and the second electrode plate. The separator can be permeable to lithium ions. The separator may include polyethylene, polypropylene, or a composite film thereof.

Referring to FIGS 1 to 3, the first electrode plate includes a first electrode uncoated portion. The first electrode uncoated portion may be a region where the first electrode active material is not coated. The first electrode tab 710 may be formed by the first electrode uncoated portion. The first electrode tab 710 may include a plurality of tabs. The first electrode tab 710 protrudes from the first electrode plate. The first electrode tab may act as a current flow path between the first electrode plate and the first current collector 610. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The first current collector 610 may include a first electrode connection part 611 and a first terminal connection part 612.

The first electrode connection part 611 may be disposed on one side of the case 100. The first electrode connection part 611 may extend in the Y-axis direction Y. The first electrode connection part 611 may be electrically connected to the first electrode tab 710. For example, the first electrode connection part 611 may be connected to the first electrode tab 710 by welding. Accordingly, the first electrode connection part 611 may be electrically connected to the first electrode plate.

The first terminal connection part 612 may be bent and extends from one end of the first electrode connection part 611. The first terminal connection part 612 may extend in the X-axis direction X. The first terminal connection part 612 may be disposed on the upper portion of the electrode assembly 800. The first terminal connection part 612 may be disposed between the electrode assembly 800 and the cap plate 310. The first terminal connection part 612 may extend in a direction parallel to the cap plate 310.

The first terminal connection part 612 may be electrically connected to the first terminal 210. For example, the first terminal connection part 612 may be connected to the first terminal 210 by welding. A first terminal insertion part 613 may be disposed on the first terminal connection part 612. One region of the first terminal 210 may be inserted into the first terminal insertion part 613 and connected to and fixed to the first terminal connection part 612.

The first terminal 210 may be electrically connected to the first current collector 610. The first terminal 210 may include a first connection terminal 211, a first terminal plate 212, a first upper insulating member 213, and a first lower insulating member 214.

The cap plate 310 includes a plurality of holes. For example, the cap plate 310 may include a first coupling hole 310a and a second coupling hole 310b.

The first connection terminal 211 may be connected to the first terminal connection part 612 by the first coupling hole 310a. For example, the first connection terminal 211 may be inserted into the case 100 by the first coupling hole 310a. One end of the first connection terminal 211 protrudes out of the cap plate 310 and may be connected to an external connection member. The protrusion of the first connection terminal 211 may be coupled to the first terminal plate 212.

In some embodiments, the other end of the first connection terminal 211 may be inserted into the first terminal insertion part 613 and electrically connected to the first terminal connection part 612. For example, the other end of the first connection terminal 211 may be inserted into the first terminal insertion part 613, and the boundary surface of the first connection terminal 211 and the first terminal connection part 612 may be welded. Accordingly, the first terminal 210 may be electrically connected to the first electrode plate by the first current collector 610.

The first connection terminal 211 may include the same material as the first terminal connection part 612. For example, the first connection terminal 211 may include aluminum. After inserting the first connection terminal 211 into the first terminal insertion part 613, laser welding may be performed along the boundary between the first connection terminal 211 and the first terminal insertion part 613. Accordingly, the first connection terminal 211 may be stably coupled to the first current collector 610.

The first terminal plate 212 may include the same material as the first connection terminal 211. For example, the first terminal plate 212 may include aluminum. After the first connection terminal 211 is coupled to the first coupling hole 310a, the first terminal plate 212 may be riveted and laser welded. Accordingly, the first connection terminal 211 and the first terminal plate 212 may be stably coupled.

The first upper insulating member 213 may be disposed on the cap plate 310. The first upper insulating member 213 may be disposed between the first terminal plate 212 and the cap plate 310. The first terminal plate 212 and the cap plate 310 may be insulated by the first upper insulating member 213.

The first lower insulating member 214 may be disposed in a region that overlaps the first coupling hole 310a. The first lower insulating member 214 may be disposed between the first connection terminal 211 and the cap plate 310. The first connection terminal 211 and the cap plate 310 may be insulated by the first lower insulating member 214. The first lower insulating member 214 may be in contact with the first upper insulating member 213.

The second electrode plate includes a second electrode uncoated portion. The second electrode uncoated portion may be a region where the second electrode active material is not coated. The second electrode tab 720 may be formed by the second electrode uncoated portion. The second electrode tab 720 may include a plurality of tabs. The second electrode tab 720 may protrude from the second electrode plate. The second electrode tab may act as a current flow path between the second electrode plate and the second current collector 620. In some embodiments, when the second electrode plate may be manufactured, the second electrode tab may be formed by being cut in advance to protrude to one side of the electrode assembly, or the second electrode tab may protrude to one side of the electrode assembly more than (e.g., farther than or beyond) the separator without being separately cut.

The second current collector 620 may include a second electrode connection part 621 and a second terminal connection part 622.

The second electrode connection part 621 may be disposed on the other side of the case. The second electrode connection part 621 may extend in the Y-axis direction Y. The second electrode connection part 621 may be electrically connected to the second electrode tab 720. For example, the second electrode connection part 621 may be connected to the second electrode tab 720 by welding. Accordingly, the second electrode connection part 621 may be electrically connected to the second electrode plate.

The second terminal connection part 622 may be bent and extended from one end of the second electrode connection part 621. The second terminal connection part 622 may extend in the X-axis direction X. The second terminal connection part 622 may be disposed on the upper portion of the electrode assembly 800. The second terminal connection part 622 may be disposed between the electrode assembly 800 and the cap plate 310. The second terminal connection part 622 may extend in a direction parallel to the cap plate 310.

The second terminal connection part 622 may be electrically connected to the second terminal 220. For example, the second terminal connection part 622 may be connected to the second terminal 220 by welding. A second terminal insertion part 623 may be disposed on the second terminal connection part 622. One region of the second terminal 220 may be inserted into the second terminal insertion part 623 and connected to and fixed to the second terminal connection part 622.

The second terminal 220 may be electrically connected to the second current collector 620. The second terminal 220 may include a second connection terminal 221, a second terminal plate 222, a second upper insulating member 223, and a second lower insulating member 224.

The second connection terminal 221 may be connected to the second terminal connection part 622 by the second coupling hole 310b. For example, the second connection terminal 221 may be inserted into the case 100 by the second coupling hole 310b. One end of the second connection terminal 221 may protrude out of the cap plate 310 and may be connected to an external connection member. The protrusion of the second connection terminal 221 may be coupled to the second terminal plate 222.

The other end of the second connection terminal 221 may be inserted into the second terminal insertion part 623 and electrically connected to the second terminal connection part 622. For example, the other end of the second connection terminal 221 may be inserted into the second terminal insertion part 623, and the boundary surface of the second connection terminal 221 and the second terminal connection part 622 may be welded. Accordingly, the second terminal 220 may be electrically connected to the second electrode plate by the second current collector 620.

The second connection terminal 221 may include the same material as the second terminal connection part 622. For example, the second connection terminal 221 may include aluminum. After inserting the second connection terminal 221 into the second terminal insertion part 623, laser welding may be performed along the boundary between the second connection terminal 221 and the second terminal insertion part 623. Accordingly, the second connection terminal 221 may be stably coupled to the second current collector 620.

The second terminal plate 222 may include the same material as the second connection terminal 221. For example, the second terminal plate 222 may include aluminum. After the second connection terminal 221 is coupled to the second coupling hole 310b, the second terminal plate 222 may be riveted and laser welded. Accordingly, the second connection terminal 221 and the second terminal plate 222 may be stably coupled.

The second upper insulating member 223 may be disposed on the cap plate 310. The second upper insulating member 223 may be disposed between the second terminal plate 222 and the cap plate 310. The second terminal plate 222 and the cap plate 310 may be insulated by the second upper insulating member 223.

The second lower insulating member 224 may be disposed in a region that overlaps the second coupling hole 310b. The second lower insulating member 224 may be disposed between the second connection terminal 221 and the cap plate 310. The second connection terminal 221 and the cap plate 310 may be insulated by the second lower insulating member 224. The second lower insulating member 224 may be in contact with the second upper insulating member 223.

The cap assembly 300 may be disposed on the upper portion of the case 100. The cap assembly 300 may be coupled to the upper portion of the case 100. Accordingly, the case 100 may be sealed by the cap assembly 300.

The cap assembly 300 may include the cap plate 310 and a safety vent 320.

The cap plate 310 may be coupled to the case 100. The cap plate 310 and the case 100 may be coupled by laser welding. The cap plate 310 may include the same material as the case 100.

The cap plate 310 may include a vent hole 310c. The safety vent 320 may be disposed on a region that overlaps the vent hole 310c. The safety vent 320 may be opened at a pressure set by a notch 320a.

The cap plate 310 may include an injection hole 310d. The electrolyte may be injected by the injection hole 310d. After the injection of electrolyte by the injection hole 310d is completed, the injection hole 310d may be sealed by the sealing cap 400. Therefore, internal electrolyte from leaking may be retained.

The protective layer 500 is disposed on the outside of the case 100. The protective layer 500 is disposed on the case 100. The protective layer 500 is disposed on the cap plate 310.

The protective layer 500 includes a support surface 501 and a side 502. The support surface 501 may be disposed on the electrode assembly 800. The support surface 501 may be disposed on the cap plate 310.

The support surface 501 includes a plurality of holes H. The holes H may be disposed in a region that overlaps the first terminal 210 and the second terminal 220. Accordingly, the first terminal 210 and the second terminal 220 may be exposed to the outside of the protective layer 500 by the holes H.

The support surface 501 includes a groove 501a. The groove 501a may be disposed in a region that overlaps the safety vent 320. The groove 501a may have a shape corresponding to the notch 320a. Accordingly, when the safety vent 320 is opened at a set pressure, gas may be easily exhausted by the groove 510a.

The support surface may include regions of different thicknesses. For example, the support surface may include a region with a greater thickness than other regions. For example, the support surface 501 may have a higher thickness in a region adjacent to the safety vent 320 of the cap plate 310 and a lower thickness in a region away from the safety vent 320. Accordingly, it may be possible to reduce or prevent the protective layer from being peeled off or damaged in the region adjacent to the safety vent 320 due to, for example, high temperature heat.

The side 502 is bent from the support surface 501. For example, the side 502 may include a plurality of sides. The sides may be bent and extended from the four sides of the support surface 501. The side 502 may be in contact with the side of the case 100. The side 502 may be disposed on one region of the side of the case 100. The side 502 may be partially disposed on the side of the case 100. For example, the total area of the sides may be smaller than the total area of the sides of the case.

For example, a length L of the side 502 may be smaller than a height HE of the case in the Y-axis direction (Y). For example, the length L of the side 502 may be 10% to 50%, 15% to 45%, or 20% to 40% of the height HE of the case 100. If the length L of the side 502 is less than 10% of the height HE of the case, the contact area of the protective layer 500 may decrease. Accordingly, the adhesion of the protective layer 500 may decrease. Also, heat or fire transferred in the lateral direction of the battery cell may not be effectively prevented.

If the length L of the side 502 exceeds 50% of the height HE of the case, the insulating efficiency of the protective layer 500 may decrease. In detail, since high-temperature gas may be exhausted from the battery cell 1000 through the safety vent 320, high-temperature heat may be concentrated in an upper region close to the safety vent. Accordingly, the lower region of the battery cell may be not significantly affected by events. Accordingly, even when the length L of the side 502 may be disposed to exceed 50% of the height HE of the case, the heat insulation efficiency with respect to the area of the protective layer may be not increased. Accordingly, the heat insulation efficiency with respect to the area of the protective layer 500 may be reduced.

The protective layer 500 may have a set melting temperature. For example, the protective layer 500 may have a melting temperature of 500°C to 1200°C, 600°C to 1 100°C, or 700°C to 1000°C. Accordingly, when an event such as high temperature heat or fire occurs in the battery cell, the protective layer 500 may be prevented from melting. Accordingly, the protective layer 500 may have improved thermal safety at high temperatures. Accordingly, when an event occurs in the battery cell, the protective layer 500 may be prevented from being damaged.

The protective layer 500 may have a set thermal conductivity. For example, the protective layer 500 may have a thermal conductivity of 0.5 W/m.k. to 0.8 W/m.k., 0.55 W/m.k. to 0.79 W/m.k., or 0.60 W/m.k. to 0.70 W/m.k. Accordingly, the protective layer 500 may have improved thermal insulation performance. Accordingly, the stability of a battery module and a battery pack including a plurality of battery cells may be improved. For example, transfer of heat or fire to adjacent battery cells can be reduced or prevented by the protective layer. Accordingly, the life, stability, and reliability of the battery module and battery pack may be improved.

The protective layer 500 may have a set elastic modulus. For example, the protective layer 500 may have the elastic modulus of 1400 * 10⁻³ kgf/cm² to 2100 * 10⁻³ kgf/cm², 1500 * 10⁻³ kgf/cm² to 2000 * 10⁻³ kgf/cm² or 1600 * 10⁻³ kgf/cm² to 1900 * 10⁻³ kgf/cm². Since the protective layer 500 has an improved elastic force, it may be easily manufactured. For example, the protective layer 500 may be adhered to the case while being folded in a plurality of directions. This may improve the process efficiency for manufacturing the battery cell.

For example, the protective layer 500 may be prepared from a resin material. Subsequently, the resin material may be processed into a shape and adhered to the case. For example, in order to remove regions overlapping each other when the resin material is folded, the corner region may be removed by a process such as punching. Subsequently, the resin material may be adhered to the upper surface (and/or the lower surface) and the side of the case while being folded along the shape of the case.

The protective layer 500 may include a resin material. For example, the protective layer 500 may include a highly heat-resistant resin. For example, the protective layer 500 may include at least one resin selected from PPS, LCP, PEI, PES, PBI, and PEEK.

Additionally and/or alternatively, the protective layer 500 may include mica, for example. The protective layer 500 may include various materials having a melting temperature, thermal conductivity, and elastic coefficient within a set range.

The protective layer 500 may have a thickness within a set range. A thickness of the protective layer 500 may be less than or equal to a height at which the first terminal 210 and the second terminal 220 protrude from the outside of the cap plate 310. Accordingly, when the first terminal 210 and the second terminal 220 are connected to the external connection member, interference of the connection by the protective layer 500 may be reduced or prevented.

For example, the thickness of the protective layer 500 may be 0.1 mm to 3 mm, 0.5 mm to 2.5 mm, or 1 mm to 2 mm. When the thickness of the protective layer 500 is less than 0.1 mm, the thermal insulation performance of the protective layer 500 may decrease. Accordingly, when an event occurs in the battery cell, heat or fire may be transferred to an adjacent battery cell. Accordingly, a chain event may occur. When the thickness of the protective layer 500 exceeds 3 mm, the size of the battery cell may increase due to the protective layer 500. Accordingly, the size of a battery module and a battery pack including a plurality of battery cells may increase. Accordingly, the usage environment of the battery module and battery pack may be limited.

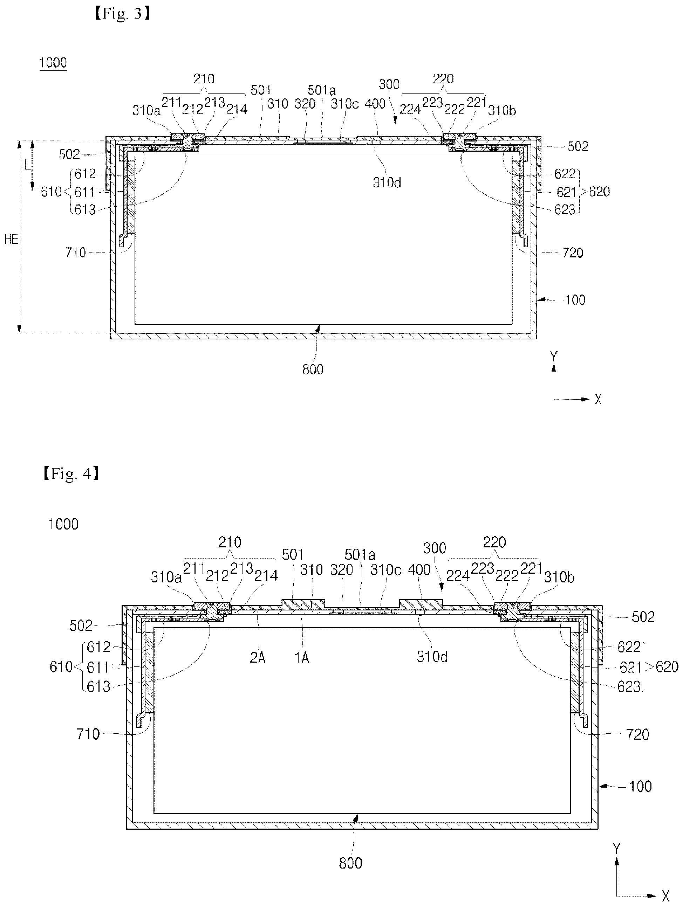

Referring to FIG. 4, the protective layer 500 may include regions with different thicknesses. This may also be combined with the other embodiments of the disclosure. For example, the support surface 501 may include regions with different thicknesses.

The support surface 501 may be divided into a first region 1A and a second region 2A. The first region 1A may be adjacent to the safety vent 320. For example, the first region 1A may be disposed closer to the safety vent 320 than the second region 2A is to the safety vent.

The thickness of the first region 1A and the second region 2A may be different. For example, the thickness of the first region 1A may be greater than the thickness of the second region 2A. The thickness of the first region 1A may be the average thickness of the first region, and the thickness of the second region 2A may be the average thickness of the second region.

A region adjacent to the safety vent 320 may be in contact with a high temperature gas. Accordingly, the protective layer 500 in the region adjacent to the safety vent 320 may be peeled off or damaged by high temperature heat. Accordingly, the thickness of the first region 1A may be greater than the thickness of the second region 2A. Accordingly, it may be possible to reduce or prevent the protective layer from being peeled off or damaged in the region adjacent to the safety vent 320.

Although FIG. 4 shows that the protective layer 500 includes the first region 1A and the second region 1B having different thicknesses, the disclosure is not limited thereto. For example, the protective layer may change in thickness while extending in one direction. For example, the thickness of the protective layer 500 may decrease as it extends from an area adjacent to the safety vent to an area distant from the safety vent. Accordingly, it may be possible to reduce or prevent the protective layer from being peeled off or damaged as described above.

The battery cell according to the first embodiment includes the protective layer. The protective layer may be disposed on the case adjacent to the safety vent. For example, the protective layer may be disposed on the cap plate. The protective layer may have a melting temperature, thermal conductivity, and elastic modulus within a set range.

Accordingly, when an event occurs in the battery cell, high temperature heat or flame may be transmitted to the outside of the battery cell. however. Embodiments may reduce or prevent the heat or flame from being transmitted by the protective layer.

Accordingly, the stability of the battery module and the battery pack including the plurality of battery cells may be improved. For example, when an event occurs in one battery cell, transfer of high temperature heat or flame to another adjacent battery cell can be blocked or reduced by the protective layer. Accordingly, it may be possible to prevent a chain reaction of other adjacent battery cells caused by the battery cell in which an event occurs.

Accordingly, the battery cell and the battery module and the battery pack including the same according to the first embodiment may have improved stability.

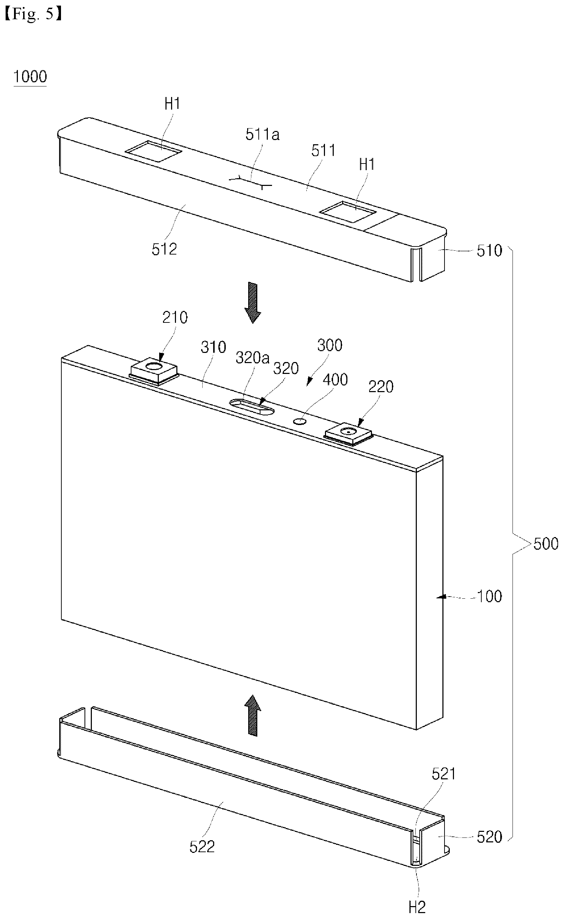

Hereinafter, a battery cell according to a second embodiment will be described with reference to FIGS. 5 to 9. Description that is the same as that of the battery cell according to the first embodiment described above will be omitted. The same reference numerals are assigned to the same components as the battery cell according to the first embodiment described above.

Referring to FIGS. 5 to 9, the battery cell according to the second embodiment includes a first protective layer 510 and a second protective layer 520.

The first protective layer 510 may include a first support surface 511 and a first side 512. The first support surface 511 may be disposed on the electrode assembly 800. The first support surface 511 may be disposed on the cap plate 310.

The first support surface 511 may include a plurality of first holes H1. The first holes H1 may overlap the first terminal 210 and the second terminal 220. Accordingly, the first terminal 210 and the second terminal 220 may be exposed to the outside of the first protective layer 510 by the first holes.

The first support surface 511 may include a groove 511a. The groove 511a may be disposed in a region that overlaps the safety vent 320. The groove 511a may have a shape corresponding to the notch 320a. Accordingly, when the safety vent 320 is opened at a set pressure, gas may be easily exhausted by the groove 511a.

The first side 512 is bent from the first support surface 511. For example, the first side 512 may include a plurality of first sides. The first sides may be bent and extended from four sides of the first support surface 511. The first side 512 may be in contact with the side of the case 100. The first side 512 may be disposed on one region of the side of the case 100. The first side 512 may be partially disposed on the side of the case 100. For example, the total area of the first sides may be smaller than the total area of the sides of the case.

The first protective layer 510 may have a melting temperature, thermal conductivity, and elastic coefficient within a set range. Since the melting temperature, thermal conductivity, and elastic coefficient of the first protective layer 510 are the same as those of the protective layer in the first embodiment described above, the same description is omitted.

The second protective layer 520 may include a second support surface 521 and a second side 512. The second support surface 521 may be disposed under the electrode assembly 800. The second support surface 521 may be disposed under the case 100.

The second support surface 521 includes a second hole H2. The second hole H2 may be disposed in a region corresponding to the lower surface of the battery cell. The second hole H2 may be disposed in a region corresponding to the lower surface of the case. Accordingly, the lower surface of the case 100 may be exposed to the outside of the second protective layer 520 by the second hole H2.

The second side 522 may be bent from the second support surface 521. For example, the second side 522 may include a plurality of second sides. The second sides may be bent and extended from four sides of the second support surface 521. The second side 522 may be in contact with the side of the case 100. The second side 522 may be disposed on one region of the side of the case 100. The second side 522 may be partially disposed on the side of the case 100. For example, the total area of the second sides may be smaller than the total area of the sides of the case.

The second protective layer 520 has a melting temperature, thermal conductivity, and elastic coefficient within a set range. For example, the melting temperature, thermal conductivity, and elastic modulus of the first and second protective layers 510 and 520 may be the same or similar. Alternatively, the melting temperature, thermal conductivity, and elastic coefficient of the first and second protective layers 510 and 520 may be different.

The battery cell according to the second embodiment may further include the second protective layer. Accordingly, the battery module including the battery cell may be easily manufactured. For example, since the protective layer may be disposed on both the top and bottom of the battery cell, the side sizes of the top and bottom of the battery cell may be the same or similar. When the upper and lower side sizes of the battery cell are different, the fixing force of the battery cell may be reduced. For example, after the battery cell is accommodated in the housing of the battery module, the fixing force of the battery cell may be reduced due to the size difference between the upper and lower sides of the battery cell. Accordingly, the stability and reliability of the battery module may be reduced.

Since the battery cell according to the second embodiment further includes the second protective layer, the upper and lower side sizes of the battery cell are formed to be the same or similar. Accordingly, the battery cell may be stably accommodated in the housing of the battery module. Accordingly, the stability and reliability of the battery module may be improved.

The first protective layer 510 and the second protective layer 520 may have different sizes.

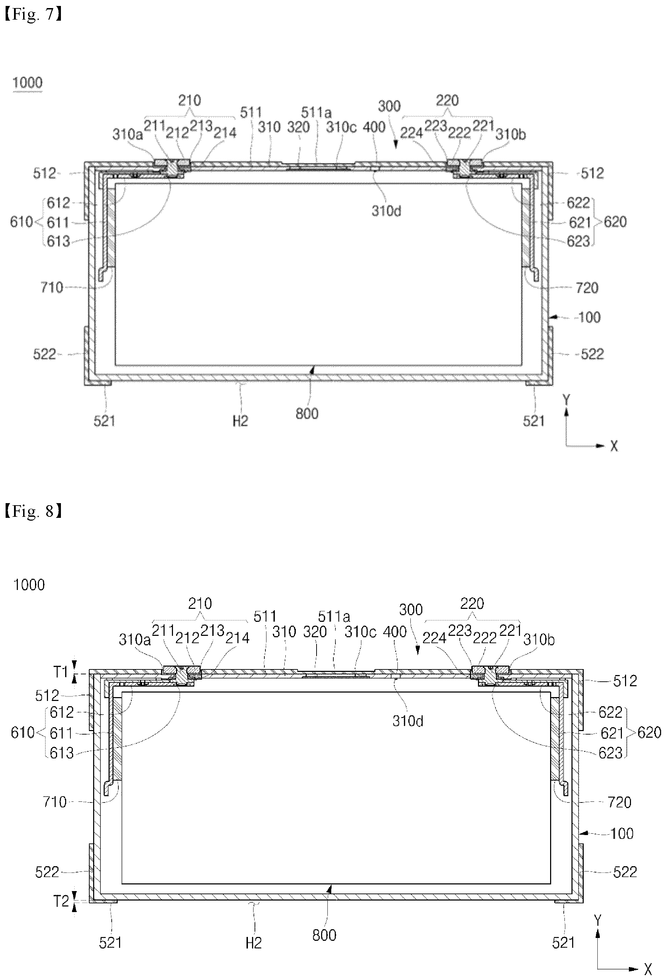

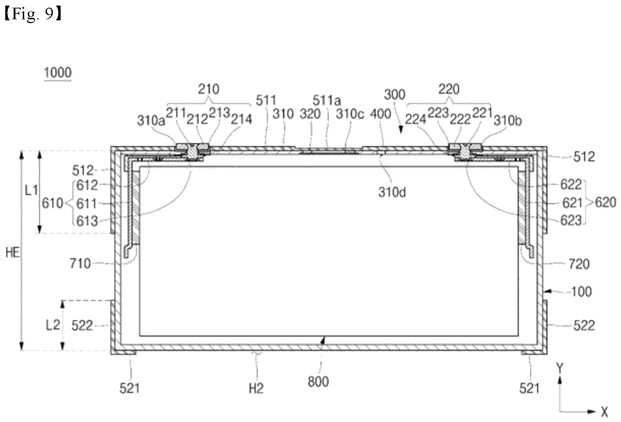

Referring to FIG. 8 and/or Fig. 9, the thickness of the first protective layer 510 and the second protective layer 520 may be different. The first protective layer 510 may have a first thickness T1. The second protective layer 520 may have the second thickness T2. The first thickness T1 may be defined as the average thickness of the first protective layer 510. The second thickness T2 may be defined as the average thickness of the second protective layer 520.

The first thickness T1 may be greater than the second thickness T2. For example, the first thickness T1 may be 0.1 mm to 3 mm, 0.5 mm to 2.5 mm, or 1 mm to 2 mm. Accordingly, the insulation performance of the battery cell may be improved, and the size of the battery cell may be prevented from increasing.

The second thickness T2 may be smaller than the first thickness T1. For example, the second thickness T2 may be 70% to 95%, 75% to 90%, or 80% to 85% of the first thickness T1. As described above, the high temperature gas emitted from the safety vent 320 may be concentrated in the upper portion of the battery cell. Therefore, the heat insulation efficiency of the battery cell may be increased by forming the first thickness to be thicker than the second thickness. When the second thickness T2 is less than 70% of the first thickness T1, a coupling force of the battery cell accommodated in the housing of the battery module may be reduced due to the difference in thickness between the first protective layer and the second protective layer may decrease.

Referring to FIG. 9, the lengths of the first protective layer 510 and the second protective layer 520 may be different.

The first protective layer 510 may have a first length L1. For example, the first side may have the first length L1. The second protective layer 520 may have the second length L2. For example, the second side may have the second length L2.

The first length L1 may be greater than the second length L2. For example, the first length L1 may be greater than 50% of the height HE of the case. The second length L2 may be less than 50% of the height HE of the case. As described above, the high temperature gas emitted from the safety vent 320 may be concentrated in the upper portion of the battery cell. Therefore, the heat insulation efficiency of the battery cell may be increased by forming the first length to be longer than the second length.

The first protective layer 510 and the second protective layer 520 may include different materials. For example, the first protective layer 510 and the second protective layer 520 may have different characteristics.

The first protective layer 510 may include a material having a melting temperature, thermal conductivity, and elastic modulus within a set range described above. The second protective layer 520 may include a material having a relatively low melting temperature and heat conductivity. Also, the second protective layer 520 may include a material with relatively high strength.

As described above, the high temperature gas emitted from the safety vent 320 may be concentrated on the upper portion of the battery cell. Accordingly, the first protective layer may include a material having a melting temperature, thermal conductivity, and elastic modulus within a set range. Accordingly, since the insulation performance of the battery cell may be improved, a chain reaction may be blocked or reduced when an event occurs.

The second protective layer may be disposed under the battery cell. The lower portion of the battery cell has relatively better thermal stability than the upper portion. Accordingly, a second protective layer with relatively high strength may be disposed under the battery cell. Accordingly, the battery cell may be prevented from being damaged by external shock.

For example, a first protective layer with good thermal insulation may be disposed on the battery cell, which has weak thermal stability, and a second protective layer with high strength may be disposed on the under the battery cell, which has relatively good thermal stability. Accordingly, the battery cell may have improved heat resistance and strength.

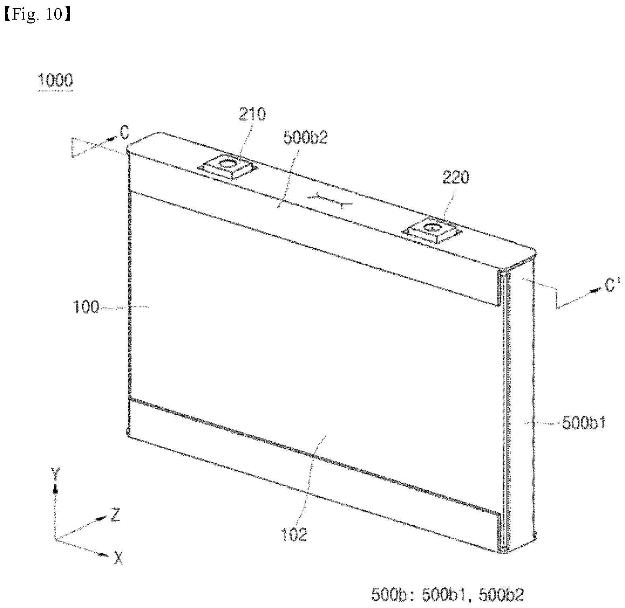

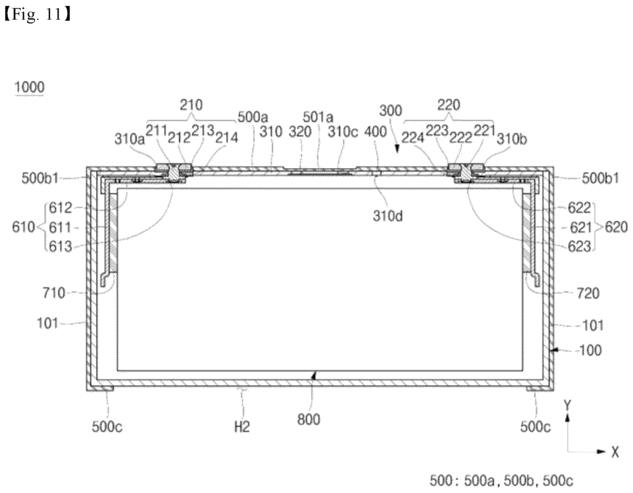

Hereinafter, a battery cell according to the third embodiment will be described with reference to FIGS. 10 and 11. Description of the same configuration as that of the battery cell according to the previously described embodiments will be omitted. The same reference numerals are assigned to the same components as the battery cells according to the previously described embodiments.

Referring to FIGS. 10 and 11, the battery cell according to the third embodiment includes a protective layer 500. The protective layer 500 may have a melting temperature, thermal conductivity, and an elastic modulus within the above-described set range.

The protective layer 500 may be disposed on the outside of the case 100. The protective layer 500 may be disposed on the top, sides, and bottom of the case 100.

The protective layer 500 may include an upper support part 500a, a side support part 500b, and a lower support part 500c. The upper support part 500a may be disposed on the cap plate 310. The side support portion 500b may be disposed on the side of the case 100. The lower support part 500c may be disposed under the case 100.

The upper support portion 500a, the side support portion 500b, and the lower support portion 500c are connected to each other. For example, the upper support portion 500a, the side support portion 500b, and the lower support portion 500c may be integrally formed.

The upper support portion 500a includes a plurality of holes. The holes overlap the first terminal 210 and the second terminal 220. Accordingly, the first terminal 210 and the second terminal 220 may be exposed to the outside of the upper support portion 500a by the holes.

The upper support portion 500a may include a groove. The groove may be disposed in a region that overlaps the safety vent 320. The groove may have a shape corresponding to the notch. Accordingly, when the safety vent 320 is opened at a set pressure, gas may be easily exhausted by the groove.

The side support portion 500b may be bent from the upper support portion 500a. For example, the side support 500b may include a plurality of side supports. The side supports may be bent and extended from the four sides of the upper support part 500a. The side support part 500b may be in contact with the sides of the case 100.

The side support part 500b may connect the upper support part 500a and the lower support part 500c.

The case 100 may be divided into a first side 101 (e.g. first side surface) and a second side 102 (e.g. second side surface) depending on location or size. The size of the first side 101, e.g. the first side surface, may be smaller than the size of the second side 102, e.g. second side surface. For example, the first side 101 may be a small side of a rectangle, and the second side 102 may be a large side of a rectangle. Alternatively, when the battery cells are accommodated in the housing of the battery module, second sides of adj acent battery cells may face each other and the first sides may not face each other.

The side support part 500b may include a first side support part 500b1 and a second side support part 500b2. The first side support part 500b1 may be disposed on the first side 101 e.g. first side surface. The second side support part 500b2 may be disposed on the second side 102, e.g., second side surface.

The first side support part 500b1 may be disposed to completely cover the first side 101. The second side support part 500b2 may be disposed in one region of the second side 102. For example, the second side support part 500b2 may be partially disposed on the second side 102.

The lower support portion 500c may be bent from the side support part 500b. For example, the lower support part 500c may be bent from the first side support part 500b 1 and the second side support part 500b2. The lower support part 500c may include a hole. The hole may be disposed in a region corresponding to the lower surface of the case. Accordingly, the lower surface of the case 100 may be exposed to the outside of the lower support portion 500c by the hole.

The battery cell according to the third embodiment may include the first side support part that covers the entire first side of the case. Accordingly, the upper support part and the lower support part are connected by the first side support part. Therefore, the protective layer may be disposed on the top, sides, and bottom of the case in a single insertion process. Accordingly, the process efficiency for manufacturing the battery cell may be improved.

When the contact area of the protective layer increases, the adhesion of the protective layer may be improved. Accordingly, the insulation efficiency of the battery cell may be improved.

The battery cell may be easily coupled to the housing of the battery module. For example, since the first side support parts are disposed on both first sides of the case, the distance between the first side of the case and the housing of the battery module may be the same or similar. Accordingly, the coupling force of battery cells coupled to the housing of the battery module can be improved.

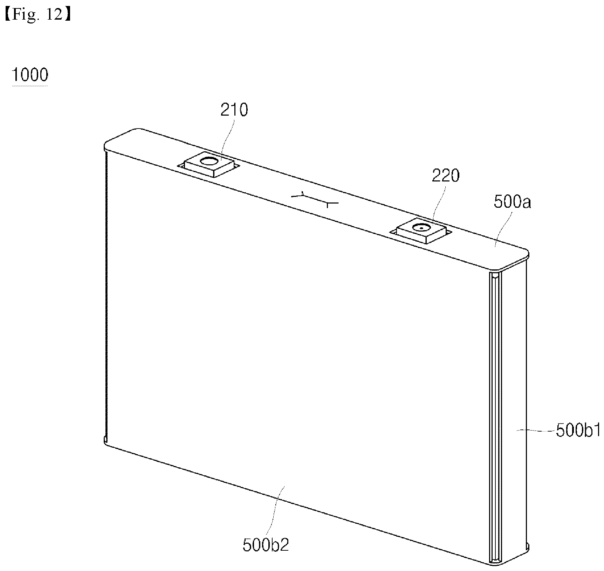

Hereinafter, a battery cell according to the fourth embodiment will be described with reference to FIG. 12. Description of the same configuration as that of the battery cell according to the previously described embodiments is omitted. The same reference numerals are assigned to the same components as the battery cells according to the previously described embodiments.

Referring to FIG. 12, the battery cell according to the fourth embodiment includes the protective layer 500. The battery cell according to the fourth embodiment may be similar to the battery cell according to the third embodiment.

In the battery cell according to the fourth embodiment, the second side support part 500b2 may cover the entire second side 102. For example, the side support part 500b may be disposed to cover both the first side, e.g. the first side surface, and the second side, e.g. the second side surface, of the case.

The battery cell according to the fourth embodiment may include the side support part that covers all sides of the case. Accordingly, the upper support part and the lower support part may be connected by the side support part. Therefore, the protective layer may be disposed on the top, sides, and bottom of the case in a single insertion process. Accordingly, the process efficiency of the battery cell may be improved.

When the contact area of the protective layer increases, the adhesion of the protective layer may be improved. Accordingly, the insulation efficiency of the battery cell may be improved.

The battery cell may be easily coupled to the housing of the battery module. For example, since the side support parts are disposed on both sides of the case, the distance between the sides of the case and the housing of the battery module may be the same or similar. Accordingly, the coupling force of battery cells coupled to the housing of the battery module may be improved.

The stability of the battery cell may be improved. When an event occurs in at least one battery cell, high temperature heat or flame may be transmitted to adjacent battery cells. For example, the protective layer of the battery cell where the event occurred may be damaged. Therefore, high-temperature heat or flame generated from the battery cell where the event occurred may move to adjacent battery cells.

The battery cell according to the fourth embodiment may include the second side support part. The second side support part may be disposed to cover the entire second side of the case. Accordingly, transfer of high temperature heat or flame generated from the battery cell where the event occurred to other adjacent battery cells may be blocked or reduced. Accordingly, the safety, life, and reliability of battery modules and battery packs may be improved.

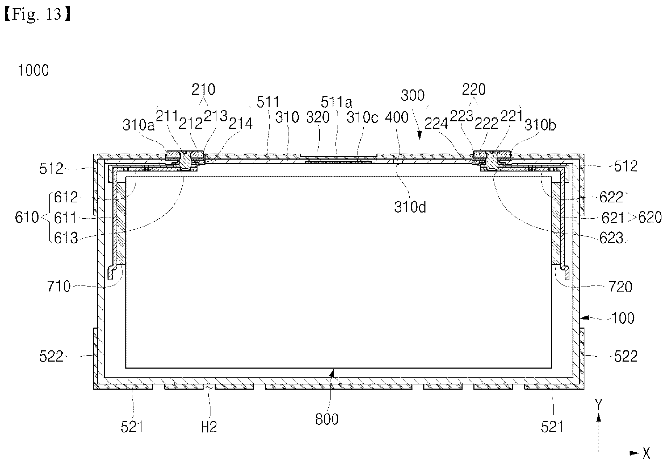

Hereinafter, a battery cell according to the fifth embodiment will be described with reference to FIG. 13. Description of the same configuration as that of the battery cell according to the previously described embodiments will be omitted. The same reference numerals are assigned to the same components as the battery cells according to the previously described embodiments.

Referring to FIG. 13, the battery cell according to the fifth embodiment may include the first protective layer 510 and the second protective layer 520. The battery cell according to the fifth embodiment may be similar to the battery cell according to the second embodiment.

The first protective layer 510 may include a first support surface 511 and a first side 512. The first support surface 511 may be disposed on the electrode assembly 800. The first support surface 511 may be disposed on the cap plate 310.

The first support surface 511 may include a plurality of first holes H1. The first holes H1 overlap the first terminal 210 and the second terminal 220. Accordingly, the first terminal 210 and the second terminal 220 may be exposed to the outside of the first protective layer 510 by the first holes.

The first support surface 511 may include a groove 511a. The groove 511a may be disposed in a region that overlaps the safety vent 320. The groove 511a may have a shape corresponding to the notch 320a. Accordingly, when the safety vent 320 is opened at a set pressure, gas may be easily exhausted by the groove 511a.

The first side 512 may be bent from the first support surface 511. For example, the first side 512 may include a plurality of first sides. The first sides may be bent and extended from four sides of the first support surface 511. The first side 512 may be in contact with side of the case 100. The first side 512 may be disposed in one region of the side of the case 100. The first side 512 may be partially disposed on the side of the case 100.

The first protective layer 510 may have a melt temperature, thermal conductivity, and elastic modulus in a set range. The melt temperature, thermal conductivity, and elastic modulus of the first protective layer 510 are the same as those of the protective layer of the first embodiment described above, and thus the same description is omitted.

The second protective layer 520 may include a second support surface 521 and a second side 512. The second support surface 521 may be disposed under the electrode assembly 800.

The second support surface 511 may include a plurality of second holes H2. The second holes H2 may be disposed in a region corresponding to the lower surface of the battery cell. The second holes H2 may be disposed in a region corresponding to the lower surface of the case. The second holes H2 may be disposed to be spaced apart from each other. The second holes H2 may be formed in a circular shape with a set diameter. Alternatively, the second holes H2 may be formed in an elliptical or polygonal shape.

Accordingly, the lower surface of the case 100 may be exposed to the outside of the second protective layer 520 by the plurality of second holes.

The second side 522 may be bent from the second support surface 511. For example, the second side 522 may include a plurality of second sides. The second sides may be bent and extended from four sides of the second support surface 521. The second side 522 may be in contact with the side of the case 100. The second side 522 may be disposed in one region of the side of the case 100. The second side 522 may be partially disposed on the side of the case 100.

The second protective layer 520 may have a melt temperature, thermal conductivity, and elastic modulus in a set range. For example, melt temperature, thermal conductivity, and elastic modulus of the first and second protective layers 510 and 520 may be the same as or similar to each other. Alternatively, melt temperature, thermal conductivity, and elastic modulus of the first and second protective layers 510 and 520 may be different from each other.

The second support surface may be disposed to cover most of the lower surface of the case. When the contact area of the second protective layer increases, the adhesion of the second protective layer may increase. Also, when handling a battery cell, the second side may be prevented from being pushed and moved in the direction of the first side. For example, since the second support surface may sufficiently support the second side, the position of the second side may be prevented from changing. Accordingly, when coupling the battery cell to the housing of the battery module, it may be possible to prevent the coupling force of the battery cell from being reduced due to the difference in position between the second sides.

Also, the second support surface may include a plurality of holes. Accordingly, heat generated from the battery cell may be exhausted to the outside by the hole. For example, the second support surface may cool the battery cell while supporting the second side.

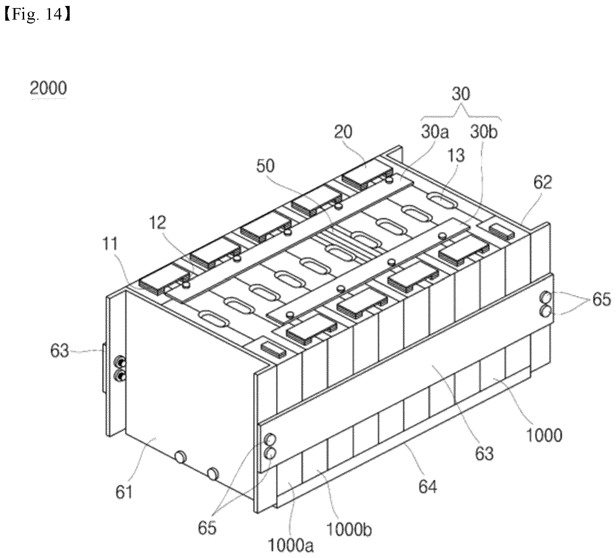

Hereinafter, a battery module including battery cells according to embodiments will be described with reference to FIG. 14.

Referring to FIG. 14, the battery module 2000 according to one or more embodiments of the present disclosure includes electrode units 11 and 12, a plurality of battery cells 1000 arranged in one direction, a connection tab 20 connecting a battery cell 1000a to an adjacent battery cell 1000b, and a protection circuit module 30 having one end connected to the connection tab 20. The protection circuit module 30 may include a battery management system (BMS). Further, the connection tab 20 may include a body portion in contact with the electrode units 11 and 12 between the adjacent battery cells 1000a and 1000b and an extension portion extending from the body portion and connected to the protection circuit module 30. The connection tab 20 may be, for example, a bus bar.

Each battery cell 1000 may include a battery case, an electrode assembly received (or accommodated) in the battery case, and an electrolyte. The electrode assembly and the electrolyte react electrochemically to store and release (e.g., generate) energy. Terminal parts 11 and 12 electrically connected to the connection tab 20 and a vent 13 as a discharge passage for gas generated inside the battery case may be provided on one side of (e.g., an upper side of) the battery cell 1000. The terminal parts 11 and 12 of the battery cell 1000 may be a positive electrode terminal 11 and a negative electrode terminal 122 having different polarities from each other, and the terminal parts 11 and 12 of the adjacent battery cells 1000a and 1000b may be electrically connected to each other in series or parallel by the connection tab 20, to be described in more detail below. Although a serial connection has been described as an example, the connection structure is not limited thereto, and various connection structures may be employed as desired or necessary. In addition, the number and arrangement of battery cells is not limited to the structure shown in FIG. 14 and may be changed as desired or necessary.

The plurality of battery cells 1000 may be arranged in (e.g., may be stacked in) one direction so that the wide surfaces of the battery cells 1000 face each other, and the plurality of battery cells 1000 may be fixed by the housings 61, 62, 63, and 64. The housings 61, 62, 63, and 64 may include a pair of end plates 61 and 62 facing the wide surfaces of the battery cell 1000 and a side plate 63 and a bottom plate 64 connecting the pair of end plates 61 and 62 to each other. The side plate 63 may support side surfaces of the battery cells 1000, and the bottom plate 64 may support bottom surfaces of the battery cells 1000. In addition, the pair of end plates 61 and 62, the side plate 63 and the bottom plate 64 may be connected by bolts 65 and/or any other suitable fastening members and methods known to those of ordinary skill in the art.

The protection circuit module 30 may have electronic components and protection circuits mounted thereon and may be electrically connected to connection tabs 20, to be described in more detail later. The protection circuit module 30 includes a first protection circuit module 30a and a second protection circuit module 30b extending along the direction in which the plurality of battery cells 1000 are arranged in different locations. The first protection circuit module 30a and the second protection circuit module 30b may be spaced from each other at a suitable interval (e.g., a predetermined interval) and arranged parallel to each other to be electrically connected to adjacent connection tabs 20, respectively. For example, the first protection circuit module 30a extends on one side of the upper portion of the plurality of battery cells 1000 along the direction in which the plurality of battery cells 1000 are arranged, and the second protection circuit module 30b extends to the other upper side of the plurality of battery cells 1000 along the direction in which the plurality of battery cells 1000 are arranged. The second protection circuit module 30b may be spaced from the first protection circuit module 30a at a suitable interval (e.g., a predetermined interval) with the vents 34 interposed therebetween but may be disposed parallel to the first protection circuit module 30a. As such, the two protection circuit modules are spaced from each other side-by-side along the direction in which the plurality of battery cells 1000 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connection member 50 may be, for example, an electric wire. In addition, the connection member 50 may be made of a material having elasticity or flexibility. By the connecting member 50, it may be possible to check and manage whether the voltage, temperature, and/or current of the plurality of battery cells 1000 are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 50.

In addition, when the battery cell 1000 swells, shocks may be absorbed by the elasticity or flexibility of the connection member 50, thereby preventing the first and second protection circuit modules 30a and 30b from being damaged.

In addition, the shape and structure of the connection member 50 is not limited to the shape and structure shown in FIG. 8.

As described above, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work if (or when) an abnormality is detected in the battery module.

Battery cells and battery modules according to the previously described embodiments may be used to manufacture the battery pack.

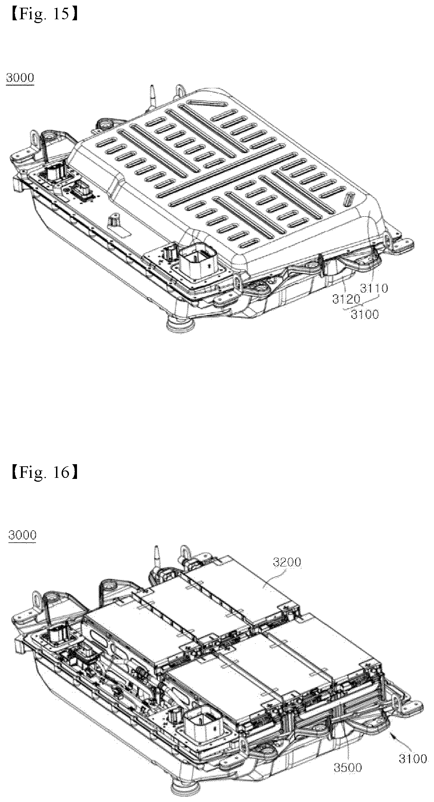

FIGS. 15 and 16 show a battery pack 3000 according to one or more embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar 251, and the plurality of battery modules 3200 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of battery cells are omitted. In one or more embodiments, battery pack 3300 may be mounted in a vehicle. The vehicle may be, for example, an electric vehicle, a hybrid vehicle, or a plug-in hybrid vehicle. A vehicle may include a four-wheeled vehicle or a two-wheeled vehicle.

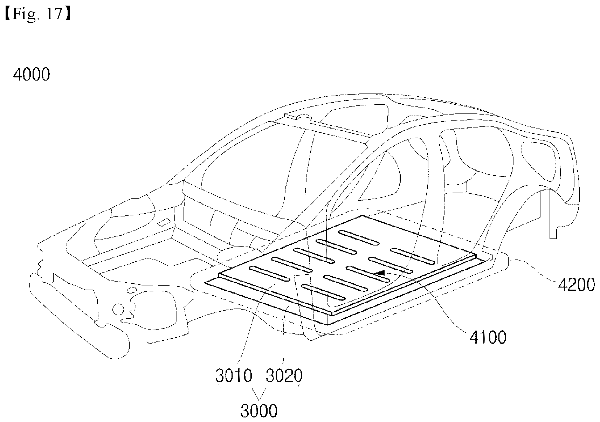

In FIG. 17, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be integrally formed with a vehicle floor 4200. The vehicle underbody 4100 separates the inside and outside of a vehicle, and the pack frame 3020 may be disposed outside the vehicle.

The battery cell may include the protective layer. The protective layer may be disposed on the case adjacent to the safety vent. For example, the protective layer may be disposed on the cap plate. The protective layer may have the melting temperature, thermal conductivity, and elastic modulus within a set range.

Accordingly, when the event occurs in the battery cell, the protective layer can reduce or prevent high temperature heat or flame from being transmitted to the outside of the battery cell.

Accordingly, the stability of the battery module and the battery pack including the plurality of battery cells may be improved. For example, when an event occurs in one battery cell, transfer of high temperature heat or flame to another adjacent battery cell can be blocked or reduced by the protective layer. Accordingly, it may be possible to reduce or prevent a chain reaction in other adjacent battery cells caused by the battery cell in which an event occurs.

Accordingly, the battery cell and the battery module and the battery pack including the same according to the embodiment may have improved stability.

The above is only one embodiment for implementing a secondary battery according to the disclosure, the disclosure is not limited to the above embodiment, and there is a technical spirit of the disclosure to the extent that various modifications can be made by anyone having ordinary skill in the art to which the disclosure pertains without departing from the gist of the disclosure as claimed in the following claims.

## Claims

1. A battery cell comprising:
a case (100);
an electrode assembly (800) accommodated inside the case (100);
a cap assembly (300) disposed on the case (100); and
a protective layer (500) disposed on the cap assembly (300) and on a side surface of the case (100),
wherein the cap assembly (300) comprises a cap plate (310),
wherein the electrode assembly (800) includes a first electrode plate, a second electrode plate, and a separator between the first electrode plate and the second electrode plate,
wherein the protective layer (500) comprises a support surface (501) and a plurality of sides (512) bent from the support surface (501).

2. The battery cell as claimed in claim 1, wherein the support surface (501) comprises regions of different thicknesses.

3. The battery cell as claimed in one of the claims 1 to 2, further comprising a first terminal (210) electrically connected to the first electrode plate and a second terminal (220) electrically connected to the second electrode plate,
wherein the cap plate (310) comprises a safety vent (320), and
wherein the support surface (501) comprises a hole (H, H1) overlapping the first terminal (210) and the second terminal (220) and a groove (501a) overlapping the safety vent (320).

4. The battery cell as claimed in one of the claims 1 to 3, wherein the side (502) of the protective layer (500) is disposed on the side surface of the case (100), and
wherein a length (L) of the side (502) of the protective layer (500) is 10% to 50% of a height (HE) of the case (100), preferably 15% to 45%, more preferably 20% to 40%, and/or
wherein a thickness (T1) of the protective layer (500) is 0.1 mm to 3 mm, preferably 0.2 mm to 2 mm, more preferably 0.5 mm to 1 mm.

5. The battery cell as claimed in one of the claims 1 to 4, wherein the support surface (501) comprises a first region (1A) and a second region (2A),
wherein the first region (1A) is closer to the safety vent (320) than the second region (2A) is to the safety vent (320), and
wherein a thickness of the first region (1A) is greater than a thickness of the second region (1B).

6. The battery cell as claimed in one of the claims 1 to 5, wherein the protective layer (500) comprises a first protective layer (510) and a second protective layer (520),
wherein the first protective layer (510) is disposed on the cap plate (310), and
wherein the second protective layer (520) is disposed under the case (100).

7. The battery cell as claimed in claim 6, further comprising a first terminal (210) electrically connected to the first electrode plate and a second terminal (220) electrically connected to the second electrode plate,
wherein the cap plate (310) comprises a safety vent (320),
wherein the first protective layer (510) comprises a first support surface (511) and a plurality of first sides (512) bent from the first support surface (511),
wherein the second protective layer (520) comprises a second support surface (521) and a plurality of second sides (522) bent from the second support surface (521),
wherein the first support surface (511) comprises a first hole (H1) overlapping the first terminal (210) and the second terminal (220) and a groove (511a) overlapping the safety vent (320),
wherein the second support surface (521) comprises a second hole (H2) exposing a lower portion of the case (100).

8. The battery cell as claimed in claim 7, wherein a thickness (T1) of the first protective layer (510) is greater than a thickness (T2) of the second protective layer (520),
and/or,
wherein a length (L1) of the first side (512) is longer than a length (L2) of the second side (522).

9. The battery cell as claimed in one of the claims 7 to 8, wherein the first protective layer (510) and the second protective layer (520) comprise different materials.

10. The battery cell as claimed in one of the claims 7 to 9, wherein the second hole (H2) comprises a plurality of spaced apart holes.

11. The battery cell as claimed in one of the claims 1 to 10, wherein the protective layer (500) has a melting temperature of 500°C to 1200°C, preferably between 600°C to 1100°C, more preferably between 700°C to 1000°C, and/or
wherein the protective layer (500) has a thermal conductivity of 0.5 watt per meter-kelvin to 0.8 watt per meter-kelvin, preferably 0.55 watt per meter-kelvin to 0.75 watt per meter-kelvin, more preferably 0.6 watt per meter-kelvin to 0.7 watt per meter-kelvin, and/or
wherein the protective layer (500) has an elastic modulus of 1400 * 10⁻³ kgf/cm² to 2100 * 10⁻³ kgf/cm², preferably 1500 * 10⁻³ kgf/cm² to 2000 * 10⁻³ kgf/cm², more preferably 1600 * 10⁻³ kgf/cm² to 1900 * 10⁻³ kgf/cm².

12. The battery cell as claimed in one of the claims 1 to 11,
wherein the first electrode plate is electrically connected to a first terminal (210),
wherein the second electrode plate is electrically connected to a second terminal (220),
the cap plate (310) comprises a safety vent (320),
wherein the protective layer (500) comprises an upper support part (500a), a side support part (500b1, 500b2), and a lower support part (500c),
wherein the upper support part (500a) comprises a hole overlapping the first terminal (210) and the second terminal (220) and a groove overlapping the safety vent,
wherein the side support (500b1, 500b2) connects the upper support (500a) and the lower support part (500c), and
wherein the lower support part (500c) comprises a hole (H2) exposing a lower portion of the case (100).

13. The battery cell as claimed in claim 12, wherein the case (100) comprises a first side surface and a second side surface,
wherein the size of the first side surface is larger than the size of the second side surface,
wherein the side support (500b1, 500b2) comprises a first side support (500b2) on the first side surface and a second side support (500b1) on the second side surface, and
wherein the first side support part (500b2) is disposed to cover the entire first side surface, and/or
wherein the second side support part (500b1) is disposed to cover the entire second side surface.

14. A battery module (3200) comprising:
a plurality of battery cells according to any one of the claims 1 to 13;
a housing fixing the battery cells;
a bus bar (251) connecting adjacent battery cells; and
a protection circuit module (30) connected to the bus bar.

15. A battery pack comprising:
a plurality of battery modules (3200) according to claim 14; and
a housing (3100) to accommodate the battery modules (3200).
